# EUROPEAN PATENT APPLICATION

(11) **EP 4 687 189 A1**
(43) Date of publication of application: **04.02.2026**
(21) Application number: 25189988.6
(22) Date of filing: 16.07.2025
(51) Int. Cl.: H01M 10/04, H01M 50/211, H01M 50/503, H01M 50/507, H01M 50/553

(54) **CONNECTION STRUCTURE FOR BATTERY CELLS AND BATTERY MODULE THEREOF**

(30) Priority: 01.08.2024 TW 113128690
(71) Applicant: Prologium Technology Co., Ltd., Taoyuan City (TW)
(72) Inventor: LEE, Cheng-Chih, Taoyuan City (TW); WU, Meng-Hung, Taoyuan City (TW)
(74) Representative: Cabinet Chaillot

(57) **Abstract**

This invention provides a connection structure for battery cells (10) and battery module (60) thereof. The connection structure includes two blade terminals (20), two fixing supports (30) and an elastic terminal (40). The blade terminal (20) includes a fixing portion (201) and a connecting portion (202). After the electrical outputs (12) of the battery cells (10) are welded to the fixing portions (201) and clamped by the fixing supports (30), the connecting portions (202) of the blade terminals (20) are exposed between the two fixing supports (30). The elastic terminal (40) is utilized to clamp the connecting portions (202) to enhance the contact and electrical connection relationship therebetween. It can easily assemble or separate the battery cells (10), via this detachable fixation, without damaging the battery cell structure during assembly or maintenance. Therefore, it is convenient to replace or reuse battery cells (10) without incurring additional processing costs.

## Description

### BACKGROUND OF THE INVENTION

### CROSS REFERENCES TO RELATED APPLICATIONS

The present application claims priority to Taiwanese Patent Application 113128690 filed in the Taiwanese Patent Office on August 1, 2024, the entire contents of which is being incorporated herein by reference.

### Field of Invention

The present invention relates to a connection structure, in particular to a connection structure for battery cells and battery module thereof that is easy to disassemble for maintenance and replacement.

### Related Art

New energy vehicles are gradually being promoted and applied in the market. The power batteries are one of the three core technologies of new energy electric vehicles. Therefore, the power battery pack is considered as a crucial component of new energy vehicles and represents a key aspect of their core competitiveness. With the widespread use of the power batteries, the lightweight is required for the new energy vehicle manufacturers to increase cruising range for the new energy vehicle. It is expected to extend the cruising range as much as possible with limited space and power capacity, so that the expansion of new energy vehicles can be smoother. The pouch designs for power batteries offers inherent advantages. As the name implies, the pouch structure differs from the conventional hard-shell packaging. The pouch structure uses flexible film materials, such as aluminum-plastic film, to encapsulate the internal battery cells or modules. Due to the use of flexible films, the overall weight and volume are lower, resulting in a higher energy density per unit volume or weight. This makes pouch batteries particularly well-suited as power batteries for new energy vehicles.

To enhance competitiveness, pouch batteries also adopt welding methods to connect the battery cell structures and modules for electrical connections. However, under current welding technologies, consistent welding quality cannot be guaranteed. Moreover, due to the difficulty of inspection, the pseudo welding issue can easily occur. Welding also introduces thermal effects that may alter surrounding materials, compromising the reliability of the product. Whether using ultrasonic welding or laser welding, the process suffers from inefficiencies and high labor, material, and equipment costs. Production efficiency and yield rate remain the major bottlenecks, which significantly impact the cost of pouch battery products.

On the other hand, once the battery cells are welded, they become difficult to disassemble. It is nearly impossible to replace individual battery cells from the stacked battery module. If even one battery cell fails or is damaged, the entire battery pack may need replacement, greatly increasing maintenance costs. For recycling, disassembling welded battery cells typically requires destroying the weld joints, which is not convenient to rework or reuse. This severely reduces the efficiency and feasibility of recycling efforts.

Therefore, this invention provides a connection structure for battery cells and battery module thereof to mitigate or obviate the aforementioned problems.

### SUMMARY OF THE INVENTION

It is an objective of this invention to provide a connection structure for battery cells and battery module thereof. The electrical outputs of battery cells are securely fixed and electrically connected to each other through the connection structure that can quick assemble and disassemble. Not only does this facilitate the replacement of individual battery cells during maintenance without damaging the battery cell structure, but it also allows for easy removal and reuse of functioning battery cells during recycling, without incurring additional processing costs.

In order to implement the abovementioned, this invention discloses a connection structure, adapted to connect two battery cells. Each battery cell has two electrical outputs. The connection structure includes two blade terminals, two fixing supports and an elastic terminal. Each of the blade terminals includes a fixing portion at one end and a connecting portion at the other end. The fixing portions of the two blade terminals are fixed to the two electrical outputs of the two battery cells respectively to form electrical connections. The two fixing supports clamp the two blade terminals and allow the connecting portions of the two blade terminals to expose therebetween. The elastic terminal with an elastic clamper is utilized to clamp the connecting portions of the two blade terminals to form electrical connection between the two connecting portions.

Furthermore, when the fixing supports are clamped onto both ends of the blade terminals, an exposed slot can be formed therebetween. The connection portions of the blade terminals are exposed within the exposed slot. The elastic terminal is integrated with a terminal insulating housing and inserted into the exposed slot to clamp the connection portions of the blade terminals. Alternatively, when the fixing supports are clamped onto both ends of the blade terminals, its end surface may be generally flat, with only the connection portions of the blade terminals being exposed. In this configuration, the elastic terminal can be integrated with a connecting board. The battery cell along with the connection structure can be inserted into the connecting board.

On the other hand, this invention discloses a battery module, which includes a plurality of stacked battery cells using the above-mentioned connection structure to fix and form an electrical connection between the battery cells. Therefore, when maintenance is required, a single battery cell can be removed and replaced simply by detaching the elastic terminal. Similarly, during recycling, battery cells that are still in good condition can be easily removed for reuse.

Moreover, this invention discloses a connection structure, adapted to connect two battery cells. Each battery cell has two electrical outputs. The connection structure includes two blade terminals and an elastic terminal. Each of the blade terminals included a fixing portion at one end and a connecting portion at the other end. The fixing portions of the two blade terminals are fixed to the two electrical outputs of the two battery cells respectively to form electrical connections. The elastic terminal with an elastic clamper slides into the blade terminals along to a longitudinal axis to fix and form electrical connection between the two connecting portions of the blade terminals.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow illustration only, and thus are not limitative of the present invention, and wherein:
FIG. 1 is a schematic diagram of the blade terminal, when attaching to the battery cell, of the connection structure of this invention.
FIGS. 2A-2C are schematic diagrams of the connection structure assembling to the battery cell of this invention.
FIGS. 3A-3F are crossed sectional views of the connection structure assembling to the battery cell of this invention.
FIGS. 4A-4G are schematic diagrams of the various embodiments for the blade terminals of the connection structure assembling to the battery cell of this invention.
FIGS. 5A-5D are schematic diagrams of the various embodiments for the elastic terminals of the connection structure assembling to the battery cell of this invention.
FIG. 6 is a schematic diagram of the connection structure of this invention, when applying in the battery module.
FIG. 7 is a schematic diagram of another embodiment of the blade terminal, when attaching to the battery cell, of the connection structure of this invention.
FIGS. 8A-8B are schematic diagrams of the connection structure shown in FIG. 7 of this invention, when assembling to the battery cell.
FIG. 9 is a schematic diagram of the connection structure shown in FIGS. 8A-8B of this invention, when assembling to the connecting board.
FIG. 10 is a schematic diagram of the connection structure of this invention, showing the battery modules of FIG. 9 being arranged in parallel.
FIGS. 11A-11B are schematic diagrams of another embodiment of the blade terminal, when attaching to the battery cell, of the connection structure of this invention.
FIG. 12 is a schematic diagram of the connection structure of this invention, showing the battery modules of FIGS. 11A-11B being arranged in parallel.

### DETAILED DESCRIPTION OF THE INVENTION

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes.

The terminology used herein is for the purpose of describing particular embodiments only and is not intended to be limiting of the general inventive concept. As used herein, the singular forms "a", "an" and "the" are intended to include the plural forms as well, unless the context clearly indicates otherwise. Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

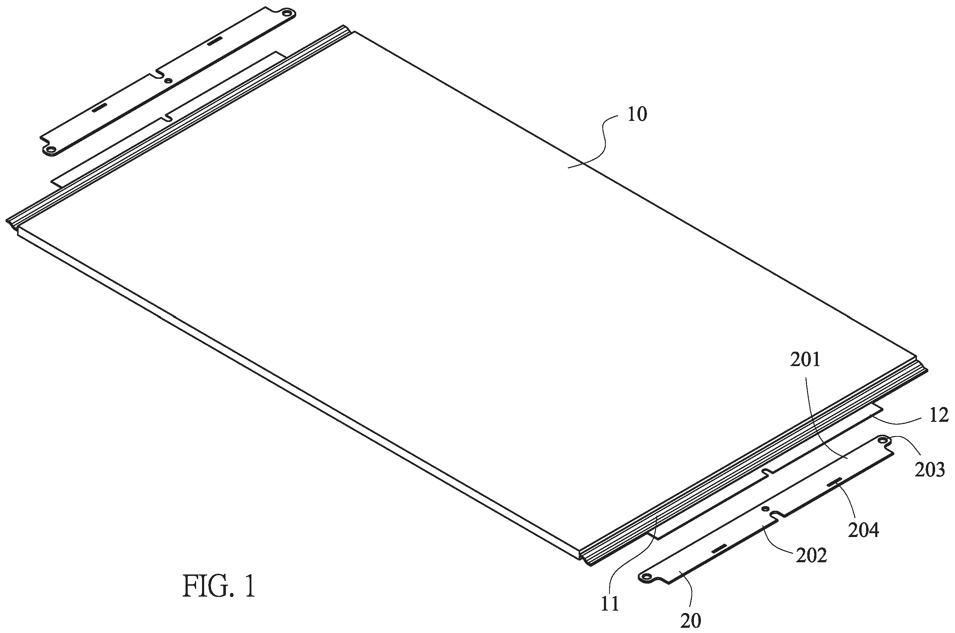

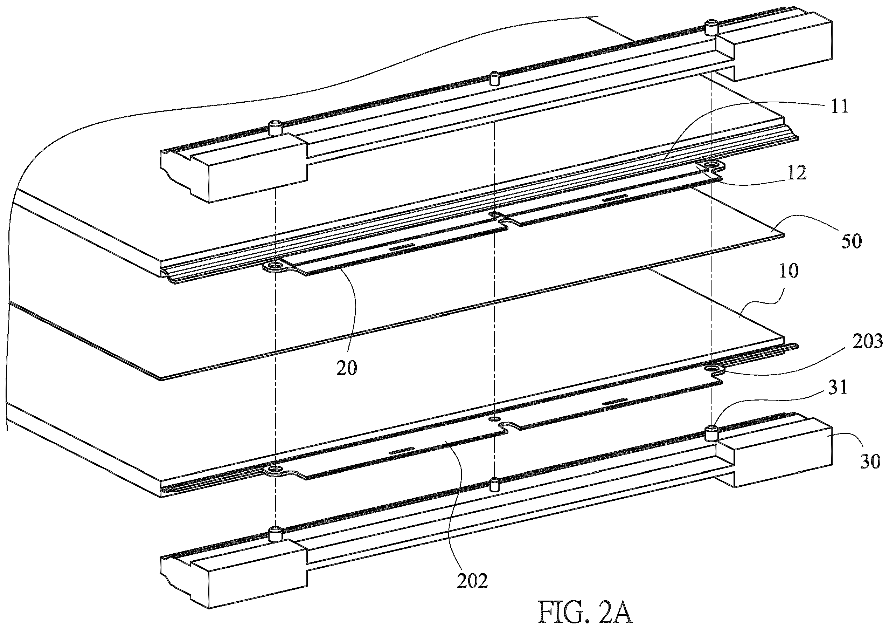

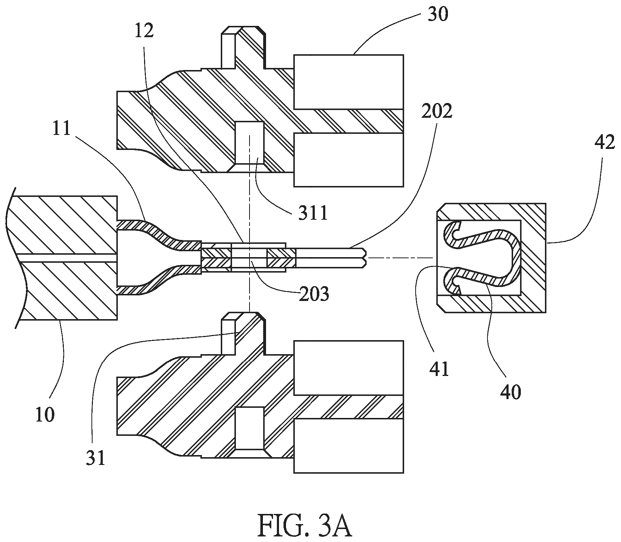

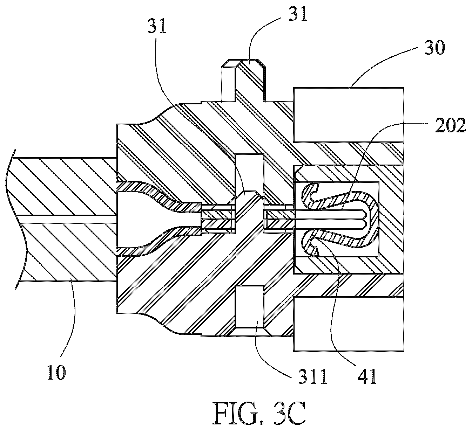

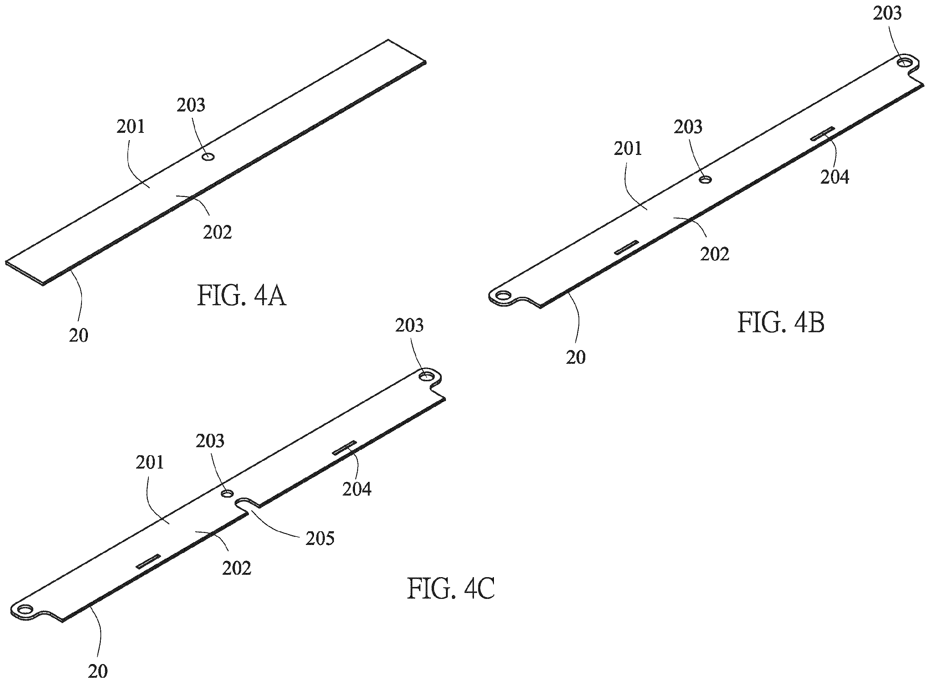

The battery cell connection structure disclosed in the present invention, see FIGS. 2A and 3A, is adapted to connect two battery cells 10 to form a series or parallel circuit configuration. The connection structure includes two blade terminals 20, two fixing supports 30, and an elastic terminal 40. Each blade terminal 20 includes a fixing portion 201 and a connecting portion 202, referring to FIGS. 4A to 4C. The elastic terminal 40 has an elastic clamper 41, referring to FIGS. 1 and 3A.

Then, please refer to FIG. 1. Each battery cell 10 includes two electrical outputs. As illustrated, these are composed of a tab 11, located inside the pouch battery cell 10, which is welded to a lead 12. Typically, since the tab 11 is relatively thin, it has to be welded to lead 12 first to facilitate subsequent processing and assembly. However, in this invention, the configuration is not limited to such an arrangement. If conditions permit the tab 11 may be used to connect directly to the blade terminal 20. In other words, the tab 11 serves the electrical output of the battery cell 10. In general, any electrical output component of the battery cell 10 falls within the scope of what this invention defines as an electrical output. For ease of understanding, the lead 12 will be used in the following illustrations and descriptions to represent the electrical output.

The blade terminal 20 is designed to match the elongated shape of the lead 12, with slightly larger dimensions and thickness. The thickness of the lead 12 typically ranges from 0.1 to 0.4 mm, while the preferred thickness of the blade terminal 20 ranges from 0.5 to 2 mm. One side of the blade terminal 20 includes a fixing portion 201, and the other side of that includes a connecting portion 202. Positioning holes 203 are provided at both ends, and the connecting portion 202 may also include a clamping slot 204. The fixing portion 201 is used to fix to the lead 12 of the battery cell 10 (commonly by welding). Once the leads 12 on both sides of the battery cell 10 are respectively welded and fixed to a blade terminal 20, the pre-processing of the battery cell 10 is complete.

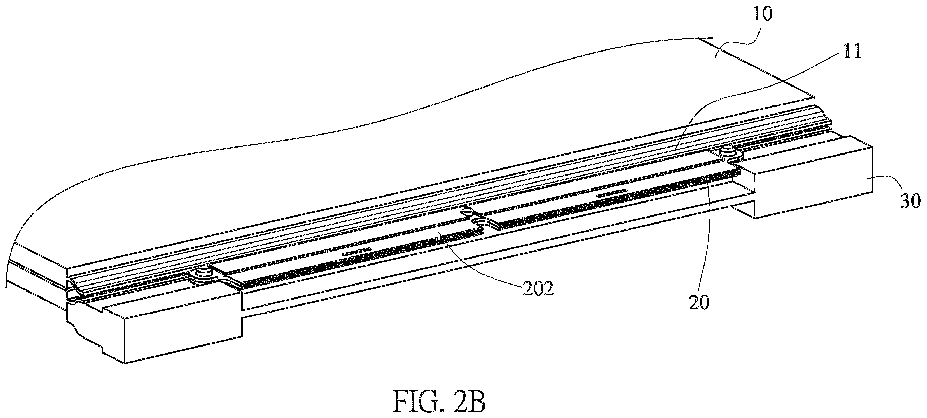

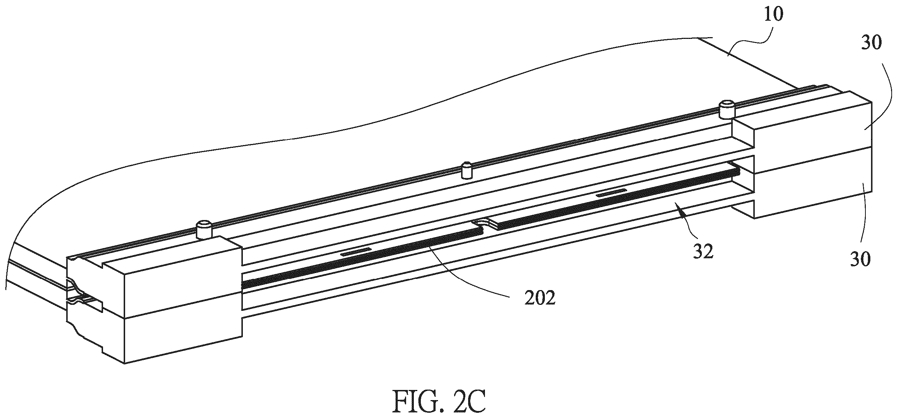

Referring to FIG. 2A, two pre-processed battery cells 10 are stacked together, with a partitioning board 50 disposed therebetween. The partitioning board 50 are made of foaming material or heat dissipating plates to enhance cushioning or heat dissipation. After the battery cells 10 are stacked, the two blade terminals 20 on the same side are joined together, as shown in FIGS. 2B-2C. The fixing support 30 is used to clamp the blade terminals 20, with the blade terminals 20 exposed between two fixing supports 30. In this embodiment, the outer profile of the fixing support 30 is H-shaped, being thicker at both sides and thinner in the middle. The top surface of the fixing support 30 is provided with a plurality of first positioning pillars 31, while the bottom surface includes notches 311 corresponding to the positioning pillars 31, see FIG. 3A. The first positioning pillars 31 pass through the positioning holes 203 of the blade terminals 20 and are engaged and fixed with the notches 311 on the bottom surface of the adjacent fixing support 30. Also, because the middle portion of the fixing support 30 is thinner, after the two fixing supports 30 are assembled, an exposed slot 32 is formed therebetween, see FIG. 2C. The connecting portions 202 of the blade terminals 20 would be exposed therein.

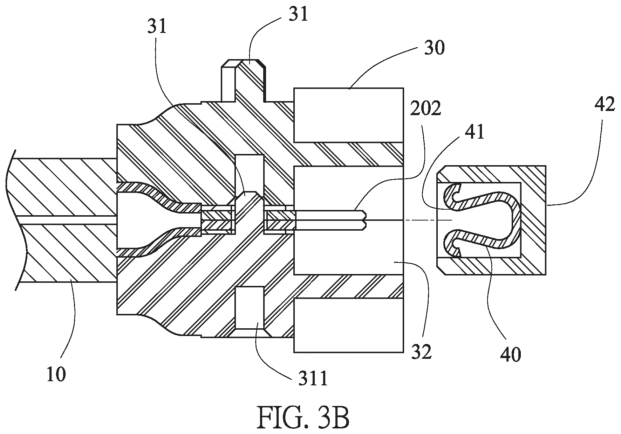

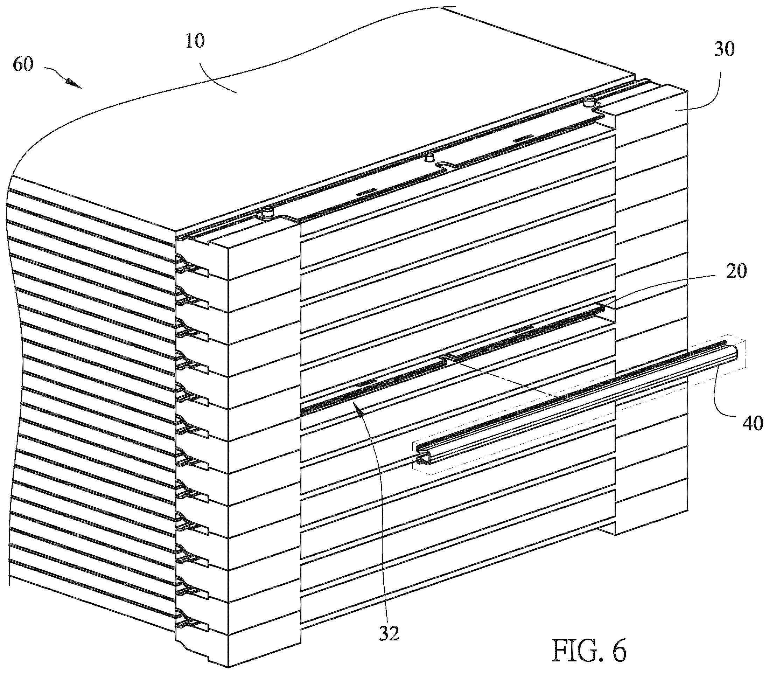

Please refer to FIG. 3A. In the cross-sectional view, after the battery cells 10 are stacked, electrical connection is established by direct contact between the blade terminals 20 and the leads 12. The first positioning pillar 31 on the top surface of the fixing support 30 passes through the positioning holes 203 of the blade terminals 20 and inserts into the notch 311 on the bottom surface of the adjacent fixing support 30 to secure and position the two blade terminals 20, as shown in FIG. 3B. When the two fixing supports 30 are assembled, the exposed slot 32 is formed therebetween. The connecting portions 202 of the two blade terminals 20 are located and exposed in the exposed slot 32. An elastic terminal 40 is inserted into the exposed slot 32 to clamp and secure the connecting portions 202, thereby enhancing the electrical connection between the two blade terminals 20. In other words, since the blade terminals 20 is electrically connected to the leads 12, the contact between the two blade terminals 20 is equivalent to establishing an electrical connection between the two leads 12. The clamping and fixing by the elastic terminal 40 reinforces the contact, and makes the contact more secure and stable, which helps to reduce resistance. The elastic terminal 40 includes an elastic clamper 41 and is disposed in a terminal insulating housing 42 with a housing space. The elastic terminal 40 is protected by the terminal insulating housing 42 to prevent accidental short circuits. Also, the terminal insulating housing 42 maintains a unified appearance with the fixing supports 30. As shown in FIG. 6, after assembly, the outer surface of the terminal insulating housing 42 is flush with that of the fixing support 30. Referring to FIGS. 3A-3B, in the cross-sectional view, it shows that the side of the fixing support 30 facing the battery cell 10 has a taper configuration. When two fixing supports 30 are joined, a cavity is formed therebetween to accommodate the tabs 11. One side of each tab 11 fits closely with the adjacent fixing support 30, while the other side is close to the adjacent tab 11. In general, within a pouch battery, the lead 12 is welded to the tab 11. For simplicity, this illustration shows the tab 11 connected directly to the lead 12.

Now referring to FIGS. 3B-3C, the elastic terminal 40 is inserted into the exposed slot 32 formed between the two fixing supports 30. The elastic clamper 41 of the elastic terminal 40 is an inward-to-outward bent clamping portion that clamps the connecting portions 202 of the blade terminals 20 to enhance the contact and fixing relationship between the elastic terminal 40 and the blade terminals 20. The reason for the blade terminal 20 is thicker than the lead 12 is to prevent bending or deformation when clamped by the elastic terminal 40, comparing to directly clamping the lead 12. It is noted that the blade terminal 20, which is used to electrically connect two battery cells 10, should be made of conductive material, preferably electrically conductive metal. The fixing support 30 mainly serves stacking and fixing purposes, so to avoid electrical conduction and reduce weight, it is preferably made of non-conductive material such as plastic. The elastic terminal 40 may be made of conductive or non-conductive material. In case of the conductive material being used, it can create an additional circuit loop for electrical connection between battery cells 10, excepting for the direct contact circuit loop of the blade terminals 20, thereby increasing the amount of current flow. The electrical connection between the battery cells 10 may be in series or parallel.

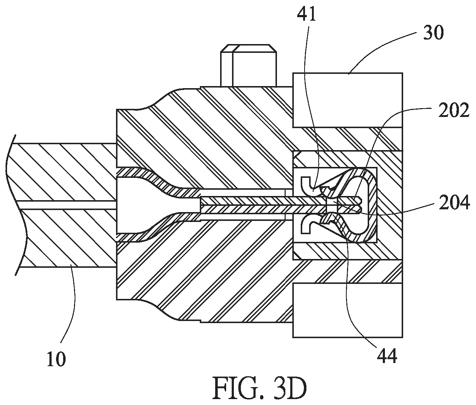

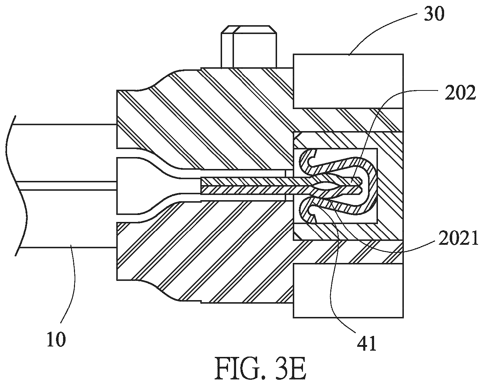

Please refer to FIG. 3D. In addition to the above-mentioned direct clamping mechanism, the elastic terminal 40 may also be secured to the blade terminal 20 by an interior elastic clamper 44 that is outwardly folded and locks into the clamping slot 204 of the blade terminal 20, thereby enhancing the stability of the clamping. Alternatively, as shown in FIG. 3E, the connecting portion 202 of the blade terminal 20 may include at least one curved surface 2021, with the curved surfaces 2021 of two adjacent blade terminals 20 protruding upward and downward respectively. Once the elastic terminal 40 is clamped, the curved surfaces 2021 is utilized to prevent the terminal 40 from disengaging from the blade terminals 20.

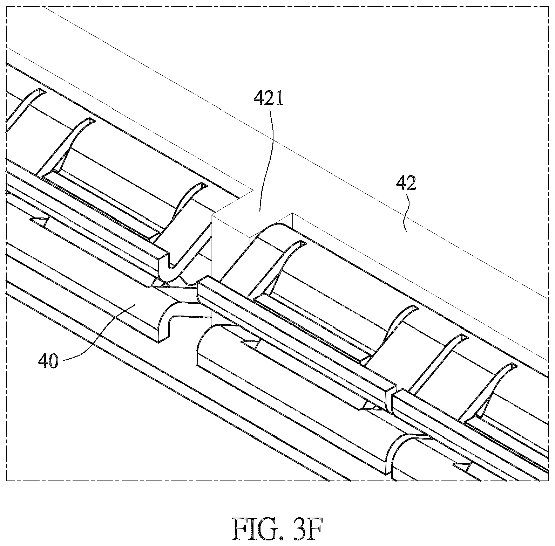

On the other hand, the blade terminal 20 may have various configurations. Please refer to FIG. 4A. The blade terminal 20 includes only the fixing portion 201, the connecting portion 202 and the positioning hole 203 located at central portion, giving it a generally rectangular shape. Please refer to FIG. 4B, which is extended from the configuration in FIG. 4A. Two additional positioning holes 203 are added at both ends of the blade terminal 20, and the clamping slot 204 is added to the connecting portion 202 to accommodate the locking of the elastic terminal 40, also see FIG. 3D. In FIG. 4C, which is extended from the configuration in FIG. 4B. An assembling slot 205 is added to the center of the connecting portion 202, and the terminal insulating housing 42 has a corresponding protrusion 421 for assembling to provide a positioning function, also referring to FIG. 3F.

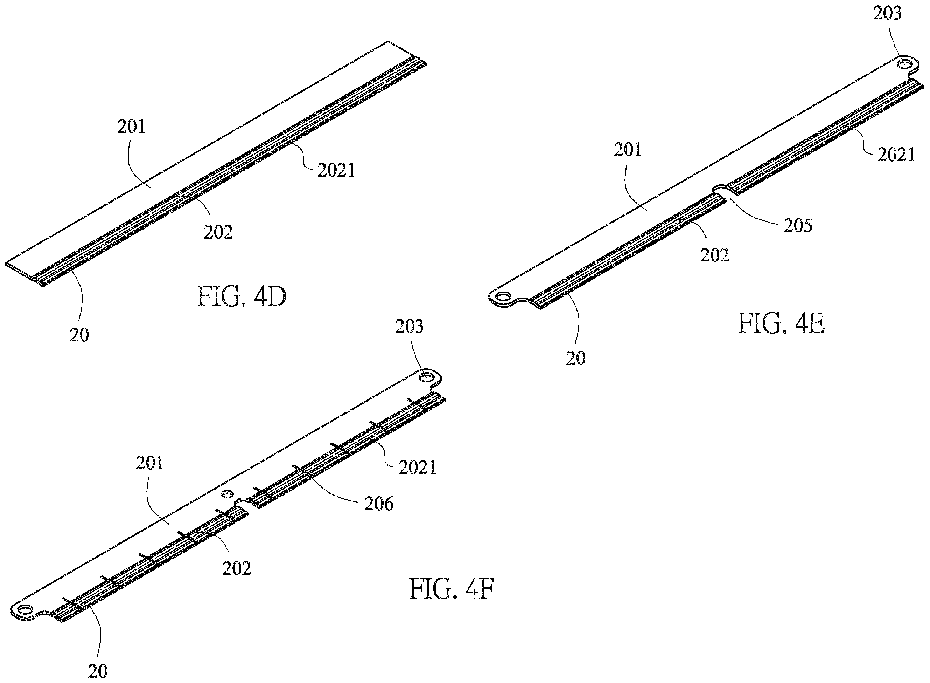

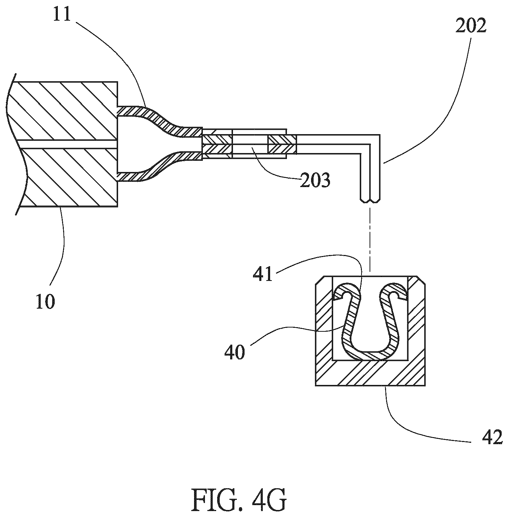

Continuing with FIG. 4D, the blade terminal 20 includes only the fixing portion 201, the connecting portion 202 and at least one curved surface 2021 located on the connecting portion 202, giving it a generally rectangular shape. The curved surface 2021 allows for clamping and securing by the elastic terminal 40, see also FIG. 3E, thereby preventing detachment. Referring to FIG. 4E, based on the configuration in FIG. 4D, two additional positioning holes 203 are added at both ends of the blade terminal 20. The assembling slot 205 is added to the center of the connecting portion 202, and the terminal insulating housing 42 has a corresponding protrusion 421 for assembling to provide a positioning function, also referring to FIG. 3F. In FIG. 4F, extending from the structure of FIG. 4E, a plurality of cutting slots 206 are provided for dividing the connecting portion 202 into a plurality of sections. This allows the connecting portion 202 to undergo varied deformations in response to the clamping force from the elastic terminal 40, resulting in a more secure clamping structure. It also increases the contact area between the elastic terminal 40 and the connecting portion 202, or between the connecting portions 202 of the two adjacent blade terminals 20. That will reduce the equivalent resistance in the circuit loop and enables higher current during discharging or charging of the battery cells 10. Moreover, in constant-current charging or discharging, the heat generation will be reduced. On the other hand, referring to FIG. 4G, the connecting portion 202 of the blade terminal 20 may be bent at an angle, such as 90 degrees, to adapt for different insertion orientations and assembly methods for the elastic terminals 40.

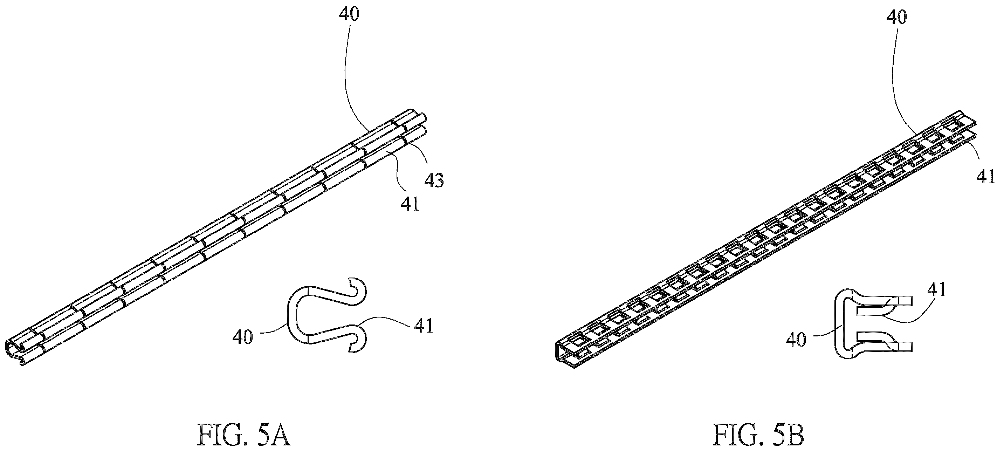

Similarly, the elastic terminal 40 with the elastic clamper 41 can take various forms. In FIG. 5A, the end of the elastic terminal 40 is outwardly bent to form the elastic clamper 41. The elastic terminal 40 also includes a plurality of cutting slots 43 to divide the elastic clamper 41 into a plurality of sections, which can deform variously to match the shape of the blade terminal 20. Thus, it can make the clamping structure between two adjacent blade terminals 20 more secure and increasing the contact area, achieving the same technical effects as previously mentioned. Continuing with FIG. 5B, the elastic terminal 40 includes a U-shaped cutout near its end, unlike FIG. 5A, which is then inwardly folded to form an interior elastic clamper 44. In other embodiments, the elastic terminal 40 may also be designed without the cutting slots 43.

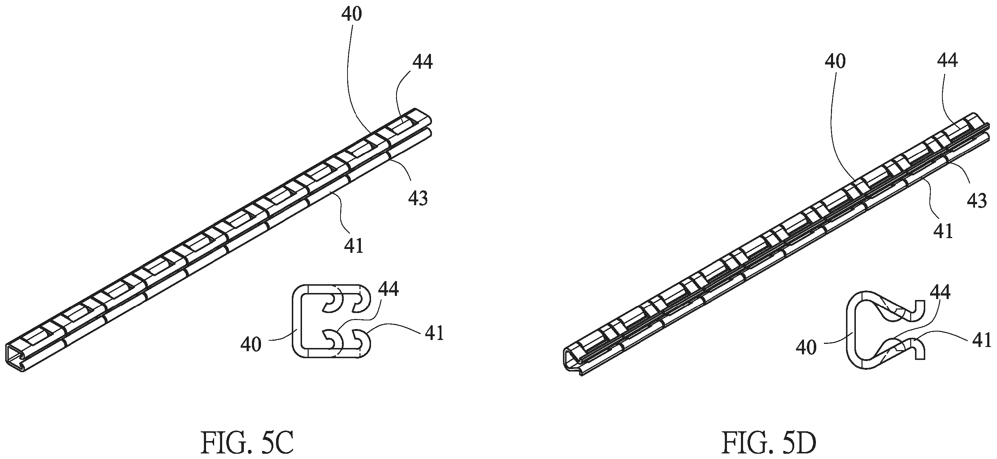

Please refer to FIG. 5C. The separated ends, formed by the cutting slots 43, and the U-shaped cutouts of the elastic clamper 41 of the elastic terminal 40 are inwardly folded to respectively form the elastic clampers 41 and the interior elastic clampers 44. The interior elastic clampers 44 are located at inside of the elastic clampers 41. Both the interior elastic clampers 44 and the elastic clampers 41 are folded inward to respectively clamp the connecting portion 202 and the clamping slot 204 of the blade terminal 20. They may also clamp the body of the blade terminal 20. In this embodiment, the interior elastic clamper 44 clamps the clamping slot 204, while the elastic clamper 41 clamps the connecting portion 202. Specifically, the elastic terminal 40 includes a body and the elastic clampers 41. The elastic clampers 41 extend outward from both ends of the body. Each elastic clamper 41 has a fixed end and a free end, i.e. adjacent to the folding portion. The fixed end is connected to the body, and the interior elastic clampers 44 are located between the body and the free end of the elastic clamper 41. Next, please refer to FIG. 5D. The elastic terminal 40 features ends and U-shaped cut sections that are outwardly folded to form the elastic clamper 41 and the interior elastic clamper 44, respectively, which are used to clamp the connecting portion 202 and the clamping slot 204 of the blade terminal 20 (see also FIG. 3D). They may also simultaneously clamp the body of the blade terminal 20. The ends and the U-shaped cutouts of the elastic clamper 41 of the elastic terminal 40 are inwardly folded to respectively form the elastic clampers 41 and the interior elastic clampers 44 to clamp the connecting portion 202 and the clamping slot 204 of the blade terminal 20, respectively, also referring FIG. 3D. They may also clamp the body of the blade terminal 20. The elastic terminal 40 may have a plurality of cutting slots 43, referring to FIGS. 5C and 5D, which divide the elastic clamper 41 into several separate sections. This allows the elastic clamper 41 to undergo varied deformations in response to the clamping force from the blade terminal 20, resulting in a more secure clamping structure between two adjacent blade terminals 20.

When applied in a battery module 60, please refer to FIG. 6. A plurality of battery cells 10 are stacked, and the electrical connection between two battery cells 10 is achieved using the connection structure of the present invention. The blade terminal 20 is first welded to the electrical output of the battery cell 10. Then, the fixing supports 30 are used to sequentially stack and clamp the two blade terminals 20. After that, the elastic terminal 40 is inserted the exposed blade terminals 20 for clamping and securing, thereby enhancing the electrical connection between the two battery cells 10. With the above structure, when one of the battery cells 10 fails and needs repair or replacement, it is only necessary to remove the corresponding elastic terminal 40 and fixing support 30 to separate the originally secured blade terminals 20, so that the corresponding battery cell 10 can be removed and replaced.

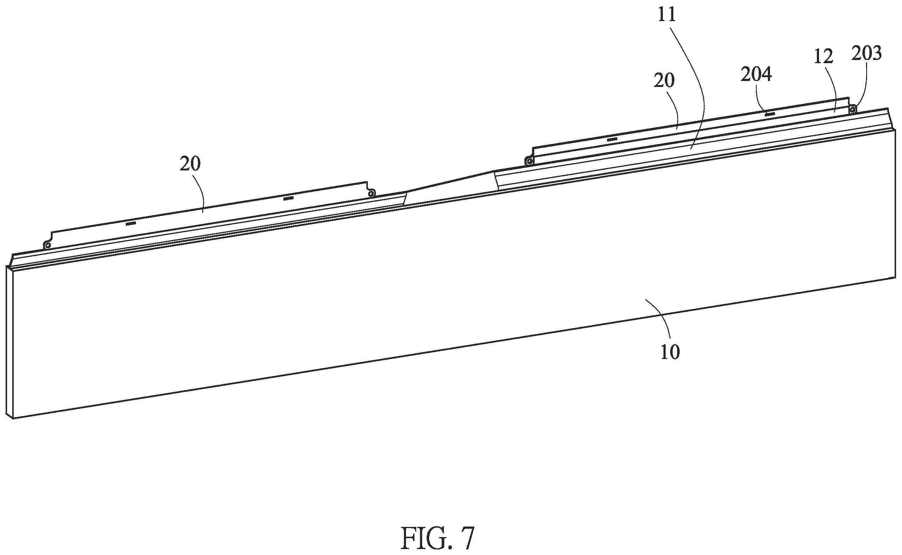

Based on the same principle, in addition to the configuration shown in FIG. 1 where the two tabs 11, together with the leads 12, of the battery cell 10 are located at opposite ends, the tabs 11, together with the leads 12 of the battery cell 10 may also be located at the same end, referring to FIG. 7. For ease of connection, the tabs 11 need to be bent and adjusted so that they are offset toward the upper and lower sides of the battery cell 10. The blade terminals 20 are also welded onto the leads 12. The structure and various alternative configurations of the blade terminals 20 are as previously described and are not repeated here.

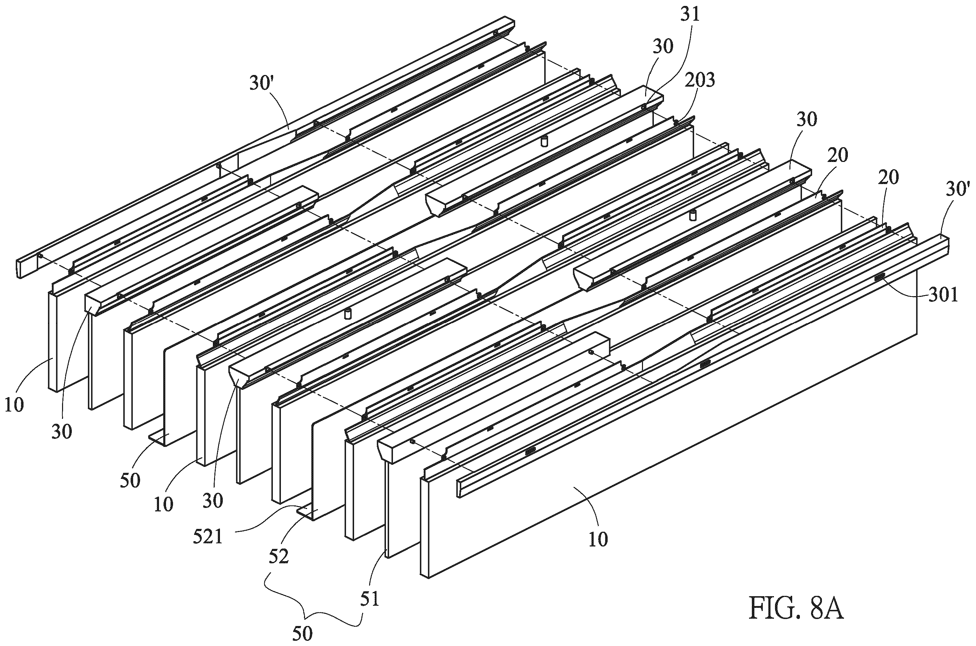

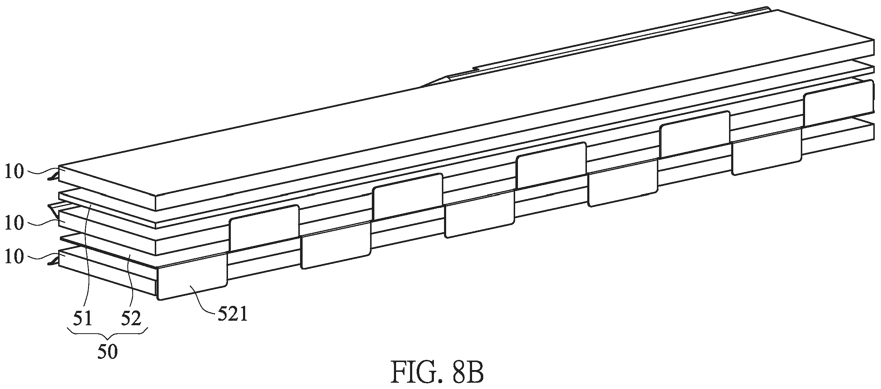

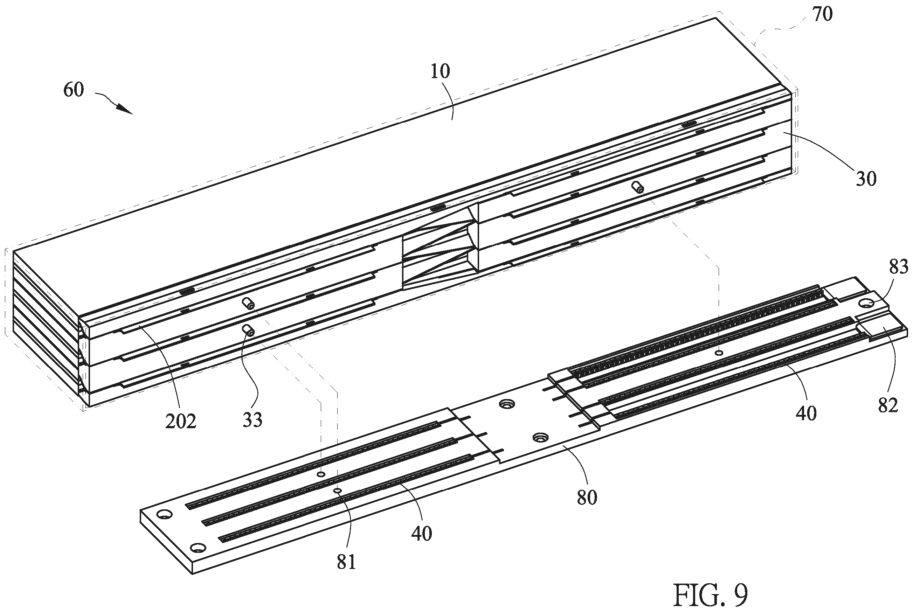

Please refer to FIGS. 8A, 8B, and 9. The fixing supports 30 are used to clamp the blade terminals 20 and expose them between two fixing supports 30. Unlike the previously described exposed slot 32 in FIG. 2C, in this embodiment, after the fixing supports 30 are assembled, no exposed slot 32 is formed. Instead, the outer surface of the assembled fixing supports 30 is generally flat and has a groove. The connecting portions 202 of the blade terminals 20 are exposed from the end face via the groove. The fixing support 30 uses a first positioning pillar 31 that passes through the positioning hole 203 of the blade terminal 20 and aligns with a corresponding notch 311 on an adjacent fixing support 30 for engagement. Between the two fixing supports 30, each blade terminal 20 is clamped on a single lead 12 from two different battery cells 10, allowing the adjacent battery cells 10 to be electrically connected in series. At the outermost sides, two protecting boards 30' are used to clamp and secure the stacked battery cells 10. Also, the battery cells 10 are also separated by partitioning boards 50, which may foam pads 51 or heat dissipating plates 52 to enhance cushioning or heat dissipation. The bottom surface of the heat dissipating plates 52 include a plurality of extended portions 521, which supports the bottom of the battery cells 10 and offers heat dissipation at bottom-side. As shown in FIG. 8B, the extended portions 521 are divided into a plurality of sections that are sequentially folded toward different sides. Alternatively, the extended portioned 521 may be folded to the same side (not shown), i.e., all sections of the extended portions 521 are folded either upward or downward. Finally, these battery cells 10 are enclosed in a case 70 to form the battery module 60. In this embodiment, one side of the case 70 has an opening. Also, the outer side of the protecting board 30' includes oblique bumps 301, which are engaged and secured with corresponding holes or recesses on the inner side of the case 70. The connecting portions 202 of the blade terminal 20, which are exposed from the end face of the fixing support 30, is also exposed at the opening of the case 70. A plurality of elastic terminals 40 are disposed on the connecting board 80 to form a socket structure, allowing the exposed connecting portions 202 of the blade terminals 20 of the battery module 60 to be inserted and clamped into the elastic terminals 40. The configurations of the elastic terminals 40 may adopt the previously described embodiments, and their structures and variations will not be redundantly described here.

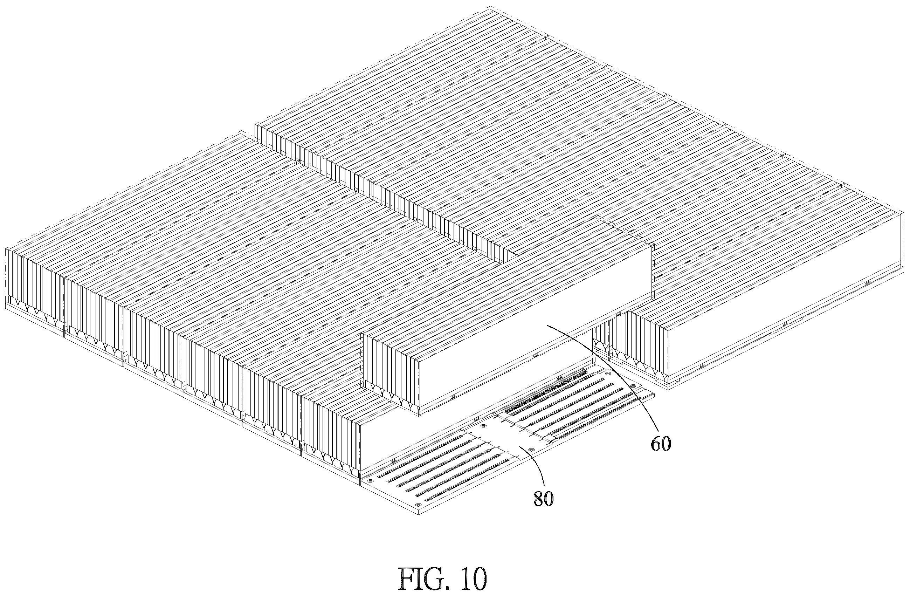

Referring to FIG. 9, to enhance the connecting strength with the connecting board 80, the connecting board 80 includes a plurality of positioning holes 81 corresponding to the second positioning pillars 33 of the fixing support 30. Through the engagement between the second positioning pillars 33 and the positioning holes 81, the fixing supports 30 can be positioned on the connecting board 80. The connection board 80 further includes at least two connecting terminals 82 that serve as the main positive and negative outputs of the battery module 60 to be the external power output contacts. Additionally, the central portion of the connecting board 80 may be slightly recessed to accommodate an electrical detection circuit (not shown). The electrical detection circuit may detect the voltage at each elastic terminal to monitor the voltage status of the battery module 60 or include a temperature sensor. The connecting board 80 may also include multiple mounting holes 83 to allow the connecting board 80 to be fixed to a base plate of the battery pack to apply in various devices. Please also see FIG. 10. Multiple sets of the battery modules 60 can be arranged side by side to expand battery capacity and application scope. A single connecting board 80 may correspond to one battery module 60 or to multiple battery modules 60.

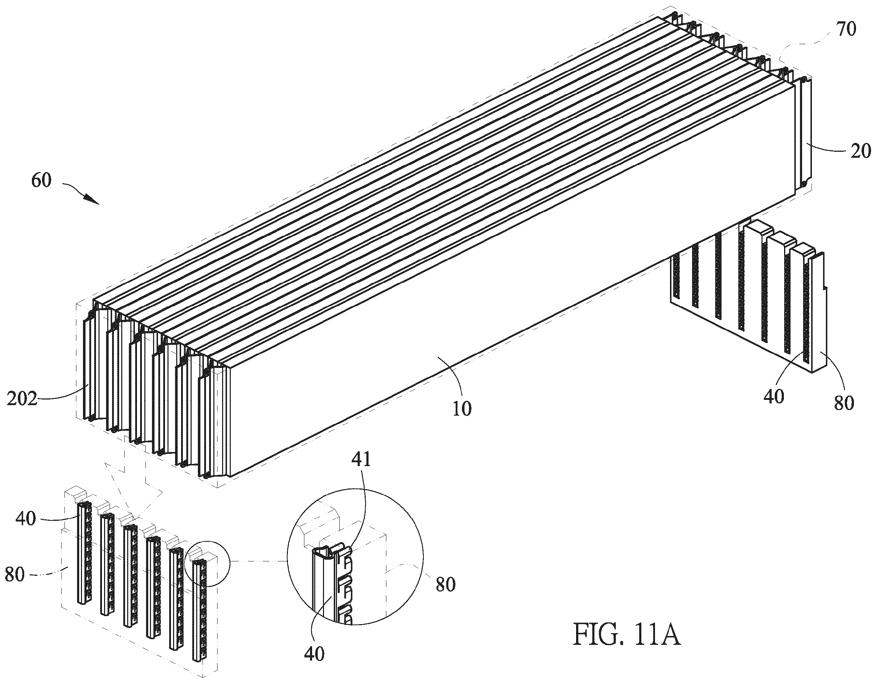

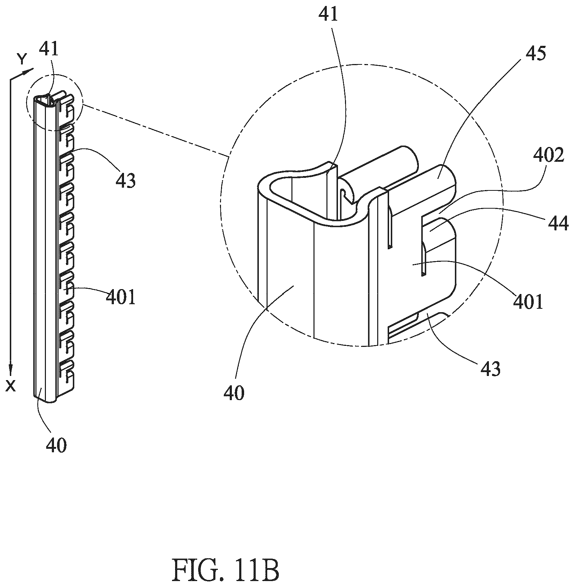

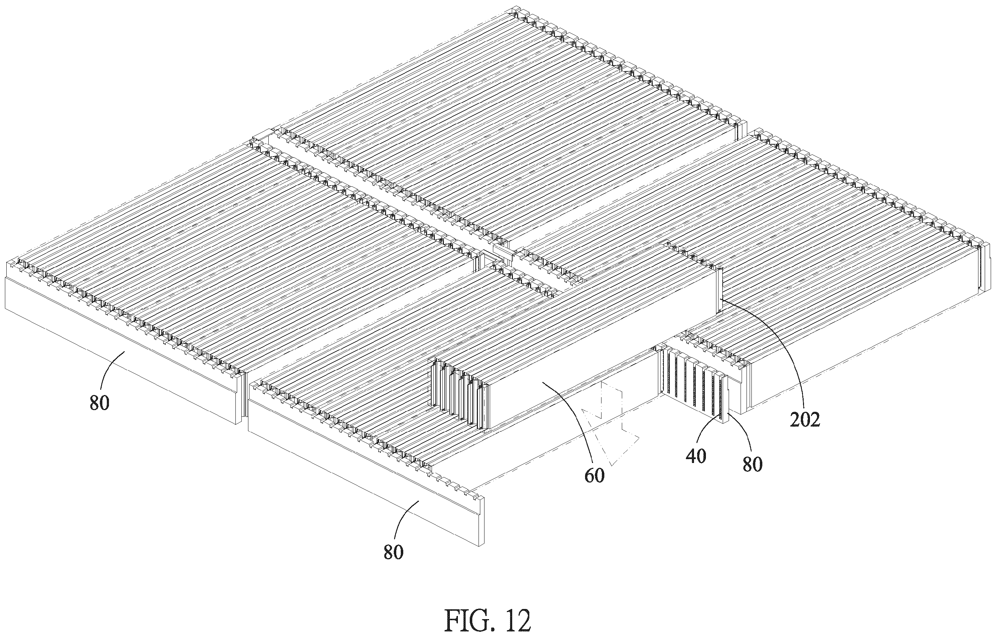

Continuing to FIG. 11A, based on the same principle of the connecting board 80, when the electrical outputs of the battery cells 10 are located at opposite front and rear ends. The battery cells 10 are upright stacked, unlike the horizontal configuration described previously. The connecting board 80 can also be employed. As shown in the figure, the battery module 60 includes a plurality of stacked battery cells 10. The structure and variants of the battery cells 10 and the blade terminals 20 are as described previously and are not repeated here. In addition to the configurations of above-mentioned embodiments where the elastic terminal 40 is installed on the connection board 80, the clamping design of the elastic terminal 40 may be another configuration. For example, multiple end sections 401 can be formed at the open end of the elastic terminal 40, i.e. the end farthest from the connecting board 80, through the cutting slots 43. Each of the end sections 401 includes an L-shaped cutout 402, and the regions around the cutting slot 43 and the L-shaped cutout 402 are bent in suitable directions to form additional clampers. Specifically, in this embodiment, the elastic terminal 40 has a longitudinal axis, X-axis in FIG. 11B, and a transverse axis, Y-axis in FIG. 11B. Along the longitudinal axis at the open end, the elastic terminal 40 is slightly retracted inward and bent upward to form an elastic clamper 41, a neck clamper. The regions at the cutting slot 43 and the L-shaped cutout 402 are inwardly bent along the transverse axis to respectively form a first interior elastic clamper 44 and a second interior elastic clamper 45, see FIG. 11B. In this configuration, the blade terminal 20 can slide along the curved portions of the first interior elastic clamper 44 and the second interior elastic clamper 45 to be inserted into the elastic terminal 40 in a direction parallel to the longitudinal axis of the elastic terminal 40. As shown in figure, the blade terminals 20, at two ends, of the battery module 60 slide along the longitudinal axis of the elastic terminal 40. Or it can be also said that the elastic terminal 40 slides along the longitudinal axis of the blade terminals 20. In this embodiment, because the insertion is along the X-axis, the force applied to the blade terminal 20 and the lead 12 is along their longitudinal direction. The longitudinal axis direction is the axis with the higher external force resistances for the blade terminal 20 and the lead 12, so it is not easy to deform. This is different from the previously described embodiments, in which the elastic terminal 40 is inserted into the blade terminal 20 along the transverse axis, Y-axis. In that case, since the Y-axis direction is structurally weaker compared to the X-axis, deformation is easier to be occurred. Moreover, a single blade terminal 20 may be engaged with multiple elastic clampers 41 and interior elastic clamper 44 on the elastic terminal 40. It will be more difficult during assembling in practice due to the blade terminal 20 may be deformed. In other words, the previous embodiments, the blade terminal 20 or the lead 12 are assembled along the transverse axis to suffer the force to engage with multiple elastic clampers 41 on the elastic terminal 40. However, in this embodiment, the direction to suffer the force during assembling is along the longitudinal axis. Therefore, in this embodiment, the blade terminal 20 or the lead 12 is less prone to deformation during insertion into the elastic terminal 40. This embodiment allows the omission of the fixing supports 30 to reduce manufacturing costs. Similarly, as shown in FIG. 12, multiple battery modules 60 can be arranged in parallel. The connecting board 80 may include several elastic terminals 40 corresponding to multiple battery modules 60. Since the battery modules 60 are inserted along the longitudinal direction of the blade terminals 20 or the leads 12, it is very convenient for assembly. For maintenance, the battery module 60 can simply be slid out in the reverse direction. Based on the same concept, in the configuration of FIG. 6, where the exposed slot 32 extends to one side at the front or rear of the battery module 60, the elastic terminals 40 can also adopt for the sliding-type configuration as showing in FIG. 11A. Moreover, in the configuration of FIG. 11A, where the blade terminals 20 are located at opposite sides, the plug-in style assembly shown in FIG. 9 can also be adopted.

Accordingly, the present invention provides a connection structure and a battery module. By using the cooperation among the blade terminals, the fixing supports and the elastic terminals, the elastic terminals can securely clamp the blade terminals to enhance the electrical connection stability of the battery cells. This enables quick assembly and connection of the battery cells and allows easy disassembling of individual battery cell for replacement or recycling without damaging their structure. Defective battery cells can be replaced, and functioning ones can be reused without additional processing costs. As a result, the invention significantly reduces assembly and maintenance costs while greatly improving the feasibility of reuse and recycling.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A connection structure, adapted to connect two battery cells (10) and each battery cell (10) having two electrical outputs (12), comprising:
two blade terminals (20), each of the blade terminals (20) including a fixing portion (201) at one end and a connecting portion (202) at the other end, wherein the fixing portions (201) of the two blade terminals (20) are fixed to the two electrical outputs (12) of the two battery cells (10) respectively to form electrical connections;
two fixing supports (30), clamping the two blade terminals (20) and allowing the connecting portions (202) of the two blade terminals (20) to expose therebetween;
an elastic terminal (40), having an elastic clamper (41) utilized to clamp the connecting portions (202) of the two blade terminals (20) to form electrical connection between the two connecting portions (202); and
a terminal insulating housing (42) for accommodating the elastic terminal (40).

2. The connection structure of claim 1, wherein the connecting portions (202) of the blade terminals (20) include at least one curved surface (2021) for clamping by the elastic terminal (40) and the connecting portion (202) of the blade terminal (20) is bent at an angle.

3. The connection structure of claim 1, wherein the connecting portions (202) of the blade terminals (20) include a plurality of cutting slots (206) for dividing the connecting portions (202) into a plurality of sections.

4. The connection structure of claim 1, wherein an exposed slot (32) is formed between the two fixing supports (30), and the connecting portions (202) of the two blade terminals (20), clamped by the two fixing supports (30), are located and exposed in the exposed slot (32) and the elastic terminal (40) is disposed in the exposed slot (32) and clamps the connecting portions (202) of the blade terminals (20).

5. The connection structure of claim 1, further comprising a connecting board (80), wherein the elastic terminal (40) is disposed in the connecting board (80) and wherein the two fixing supports (30) form a substantially planer end surface at one side when clamping the blade terminals (20), and only the connecting portions (202) of the two blade terminals (20) are exposed in the end surface to insert into the elastic terminal (40) of the connecting board (80).

6. The connection structure of claim 5, wherein the connecting board (80) comprising:
a plurality of elastic terminals (40), disposed on one side of the connecting board (80) and corresponding to the connecting portions (202); and
at least one connecting terminal (82), disposed on one side of the connecting board (80) and serves a main positive output or a main negative output.

7. The connection structure of claim 1, wherein the connecting portion (202) of the blade terminal (20) has at least an assembling slot (205) and the terminal insulating housing (42) has at least one protrusion (421) corresponding to the assembling slot (205).

8. The connection structure of claim 1, wherein the elastic clamper (41) of the elastic terminal (40) includes a plurality of cutting slots (43) for dividing the elastic clamper (41) into a plurality of sections.

9. The connection structure of claim 1, wherein the elastic terminal (40) further includes an interior elastic clamper (44) inside the elastic clamper (41) and an end of the interior elastic clamper (44) is formed by cutting the elastic terminal (40) and folding inward or outward.

10. A battery module (60), comprising a plurality of stacked battery cells (10) using the connection structure of claim 1 to fix and form an electrical connection in series or in parallel between the battery cells (10).

11. The battery module (60) of claim 10, further comprising a shell (70) and at least one protecting board (30'), wherein the shell (70) covers the battery cells (10) and the protecting board (30') is disposed outside the fixing support (30) and has an oblique bump (301) to fix an inner side of the shell (70).

12. A connection structure, adapted to connect two battery cells (10) and each battery cell having two electrical outputs (12), comprising:
two blade terminals (20), each of the blade terminals (20) including a fixing portion (201) at one end and a connecting portion (202) at the other end, wherein the fixing portions (201) of the two blade terminals (20) are fixed to the two electrical outputs (12) of the two battery cells (10) respectively to form electrical connections; and
an elastic terminal (40), having an elastic clamper (41), a longitudinal axis (X) and a transverse axis (Y), wherein the elastic clamper (41) is bent along to the longitudinal axis (X) and the blade terminals (20) slide into the elastic terminal (40) along to the longitudinal axis (X), so that the elastic clamper (41) clamps the connecting portions (202) of the blade terminals (20) to form electrical connection between the two connecting portions (202).

13. The connection structure of claim 12, wherein the elastic terminal (40) is disposed in a connecting board (80).

14. The connection structure of claim 12, wherein the elastic clamper (41) of the elastic terminal (40) is bent along to the longitudinal axis (X) and/or the transverse axis (Y) from an open side to an inner side and the blade terminals (20) slides into the elastic terminal (40) along to the longitudinal axis (X).

15. A battery module (60), comprising a plurality of stacked battery cells (10) using the connection structure of claim 12 to fix and form an electrical connection in series or in parallel between the battery cells (10).
